# EUROPEAN PATENT APPLICATION

(11) **EP 2 056 254 A1**
(43) Date of publication of application: **06.05.2009**
(21) Application number: 08015654.0
(22) Date of filing: 04.09.2008
(51) Int. Cl.: G06T 5/00

(54) **Method for displaying images**

(30) Priority: 01.11.2007 TW 96141204
(71) Applicant: HTC Corporation, Taoyuan County 330 (TW)
(72) Inventor: Chen, I-Fei, Taoyuan City Taoyuan County 330 (TW); Shih, I-Fen, Taoyuan City Taoyuan County 330 (TW); Liu, Jian-Chyn, Taoyuan City Taoyuan County 330 (TW); Tai, Kuo-Hsi, Taoyuan City Taoyuan County 330 (TW); Chen, Chien-Chung, Taoyuan City Taoyuan County 330 (TW)
(74) Representative: Becker Kurig Straus

(57) **Abstract**

A method for displaying images is provided. First, an image viewing function is activated. Then, an image information file which stores image information corresponding to a plurality of images is read. Properties and effects of the images are adjusted based on the obtained image information. Finally, the adjusted image is displayed. Accordingly, the images can be adjusted, displayed, and sorted quickly without modifying original files of the images.

## Description

### BACKGROUND OF THE INVENTION

### Field of the Invention

The present invention relates to a method for displaying images, and more particularly to a method for quickly displaying images by using specific files to record image information.

### Description of Related Art

With prevalence of digital cameras, the way of capturing images becomes easy. Relatively, images required to be processed also increase in multiple. Therefore, how to provide a convenient and quick method for efficiently managing a great amount of images and displaying the images for users' browsing and viewing has brought an important issue to the software technicians, such as in image browsing, image managing and images processing fields.

Information related to general images is saved in the Exchangeable Image Files (EXIF), which are usually generated when images are captured by digital cameras. Besides thumbnails used for being displayed on the cameras, image information, such as filenames, length of filenames, file time, capturing time, size, rotation angle and effects are also included.

Furthermore, when users activate the image viewing function of a device to read images, the device is also required to access the EXIF files of the images so that the images can be accurately displayed. During the process of displaying images, if properties (e.g. size) or effects (e.g. being displayed vertically or horizontally) of the images are changed, relevant information in the EXIF files are required to ensure that the latest updated aspects of the images can be retained when the images is displayed next time.

However, the speed of writing the properties or effects of the images back to their EXIF files is very slow. Meanwhile, reading from and writing into the EXIF files repetitively are time and resource consuming, which cause users to wait for a period of "processing time" for processing the next image. Once the amount of images increases, it becomes quite time and energy consuming, which results in users' heavy workload while managing images.

### SUMMARY OF THE INVENTION

In view of the foregoing, the present invention provides a method for displaying images, by which image information of images, such as property and effect, is obtained from additionally saved image information files so as to adjust the images accordingly and display the same without changing the original files of the images.

The present invention provides a method for displaying images, by which time information of each of images is obtained from additionally saved image information files so as to quickly sort the images and provide the same for users' viewing.

The present invention provides a method for displaying images used for displaying a plurality of images. The method includes steps as follows: a. activating an image viewing function; b. reading an image information file, which stores image information corresponding to each of the images in the image information file; c. a property or an effect of the corresponding image is adjusted based on the image information so as to display the adjusted image.

In an embodiment of the present invention, step (a) further includes collecting the image information of each of the images in advance and writing the same into the image information file.

In an embodiment of the present invention, the step of collecting the image information of each of the images includes reading an exchangeable image file (EXIF) of each of the images so as to obtain the image information of each of the images. The image information includes one of filename, length of filename, file time, capturing time, size, rotation angle and effect of the image or a combination thereof.

In an embodiment of the present invention, in step (c), it includes rotating the image based on the rotation angle so as to display the rotated image.

In an embodiment of the present invention, the method further includes receiving an image adjusting instruction. Then, based on the image adjusting instruction, a currently displayed image is adjusted correspondingly, and the image information in the image information file corresponding to the image is updated. The image adjusting instruction includes one of renaming the image, adjusting a path of the image and rotating the image.

The present invention provides a method for displaying images used for displaying a plurality of images. The method includes reading external image information files when an image viewing function is activated so that time information corresponding to the images is obtained. Then, the images are sorted based on the time information so as to display the images.

In an embodiment of the present invention, the method further includes reading both original files and the image information in the image information file corresponding to the images so that properties or effects of the images obtained from the original file are adjusted based on the image information and the adjusted images are displayed.

In an embodiment of the present invention, the image information includes one of filename, length of filename, file time, capturing time, size, rotation angle and effect of the image or a combination thereof.

In an embodiment of the present invention, the method further includes receiving an image adding instruction so that the image information of the added image is retrieved and added into the image information file. In addition, the method also includes receiving an image deleting instruction so that the image information in the image information file corresponding to the deleted image is deleted.

The present invention provides a method for displaying images used for display one of a plurality of images. The method includes steps as follows. First, a displaying instruction to display one of the images is received, and then both the original file of the image and an external image information file are read at the same time so as to obtain a rotation angle corresponding to the image. Finally, the image obtained from the original file is rotated according to the rotation angle so as to display the rotated image..

The present invention adopts a structure of recording the image information in a specific file, by which the image information of each of the images is collected and saved when a viewing function is activated. Therefore, when the image is sequentially displayed, the required image information can be quickly obtained so as to display the image accordingly. Furthermore, the method of additionally recording the image information can achieve aspects of quickly adjusting, displaying and sequencing.

In order to the make the aforementioned and other objects, features and advantages of the present invention more comprehensible, several embodiments accompanied with figures are described in detail below.

### BRIEF DESCRIPTION OF THE DRAWINGS

FIG. 1 is a flow chart of a method for displaying images according to an embodiment of the present invention.

FIG. 2 is an example illustrating an image information file according to an embodiment of the present invention.

FIG. 3 is a flow chart of a method for displaying images according to an embodiment of the present invention.

FIG. 4 is a flow chart of a method for updating image information files according to an embodiment of the present invention.

FIG. 5 is a flow chart of a method for displaying images according to an embodiment of the present invention.

### DESCRIPTION OF EMBODIMENTS

Generally, information associated with images is saved in their exchangeable image files (EXIF). If required image information can be obtained from an EXIF file of each of the images and saved as a single file while an image viewing function is activated. Through only accessing the file, each of the images can be accurately displayed without multiple accessing of the EXIF file when reading or adjusting the images. Such manner is simple and quick. The present invention is a method of displaying images based on the concepts as described above. In order to make the present invention more comprehensible, embodiments are described below so as to prove that the invention can actually be realized.

### The First Embodiment

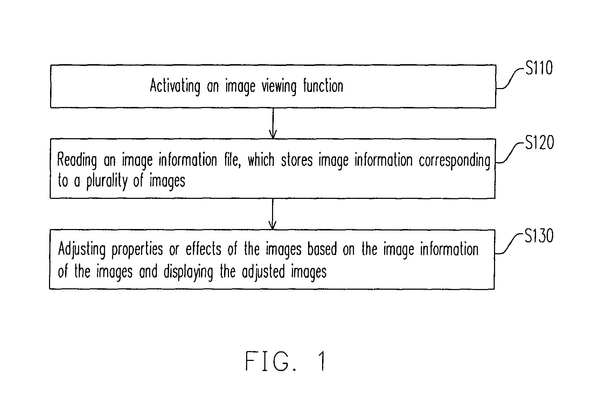

FIG. 1 is a flow chart of a method for displaying images according to an embodiment of the present invention. Referring to FIG. 1, the present embodiment is adapted to devices, such as computers, personal digital assistances (PDAs) and mobile phones, which is suitable for displaying one of a plurality of images saved in the device. The images are, for example, saved in an album folder of the device for users' browsing and viewing.

In the present embodiment, an image viewing function is activated first (S 110). The image viewing function can be activated through opening application software of the windows, or alternatively, self-activated by an operation system built in the device after the device is initiated. The present embodiment is not intended to limit the activation method.

Next, an additional image information file is read. In the image information file, image information corresponding to a plurality of images is saved (step S120). In detail, the image information of each of the images is, for example, collected in advance and then written into the image information file when the image viewing function is activated. A method for collecting the image information is, for example, to directly read the EXIF file of each of the images. The image information includes filename, length of filename, file time, capturing time, size, rotation angle and effect of the image or a combination thereof.

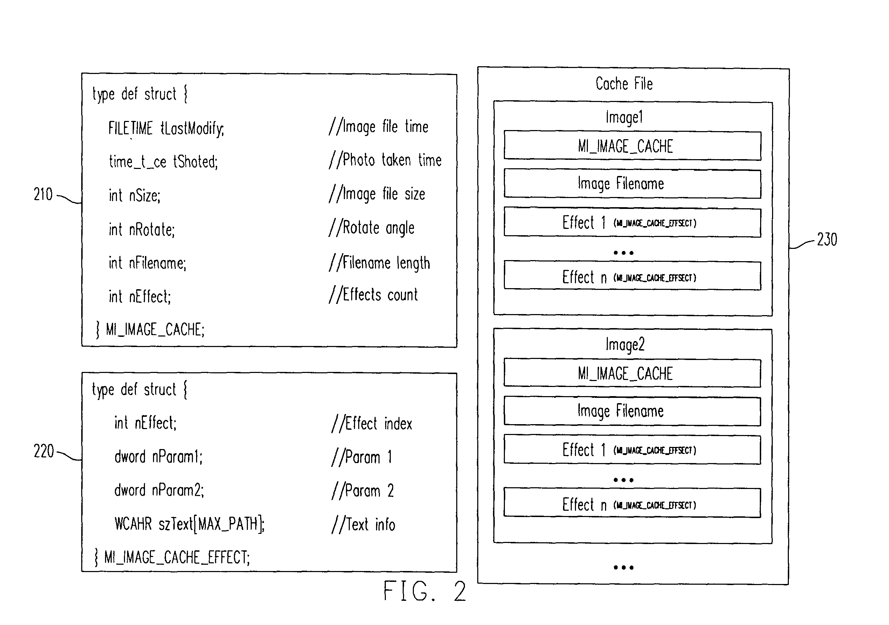

For instance, FIG. 2 is an example illustrating an image information file according to an embodiment of the present invention. Referring to FIG. 2, image information 210 and image information 220 show a kind of metadata indicating record basic information and effect information of the image, respectively. The image information 210 includes image file time, photo taken time, file size, rotation angle, length of filename and effect count, while the image information 220 includes effect index, parameters 1, 2 and text information. After the image information, such 210 and 220, is collected by the device, it will be saved in an image information file 230. As shown in FIG. 2, in the field of image 1, information, such as filename, effect 1 through effect n, is recorded, and in the field of image 2, information, such as filename, effect 1 through effect n, is recorded accordingly.

After the image information file is established, every time when an image viewing instruction is received by the device, the property or effect of the image is adjusted based on the received image information and the adjusted image is displayed (step S130). In detail, the device first reads the original file of the image required to be displayed and searches for the image information corresponding to the image in the image information file at the same time. Then, the property or effect of the image obtained from the original file is adjusted based on the obtained image information. Finally, the adjusted image is displayed.

By adopting the method as described above, properties or effects of images can be adjusted without changing their original files while images are saved. In addition, image information of all images is collected and managed in the same image information file. Therefore, when each of the images is going to be displayed in the device, only the image information file is required to be read instead of accessing the the EXIF file of each of the images one by one. Hence, the time spent on reading the image file can be reduced, and the operation resource of the device can be saved.

It should be noted that the present invention further includes adjusting the rotation angle of the image obtained from the original file based on the obtained image information. For example, given that the image to be displayed is vertically (i.e. being rotated at 90°) captured, the method of the present invention can be used to access the original file of the image first so as to obtain a pixel value of each pixel of the image. Then, the rotation angle (90°) of the image is read from the image information file, and the image is rotated at 90° according to the rotation angle. After that, the rotated image is displayed on the screen of the device. An embodiment of the present invention being applied to the function of rotating images will be described as follows.

### Second Embodiment

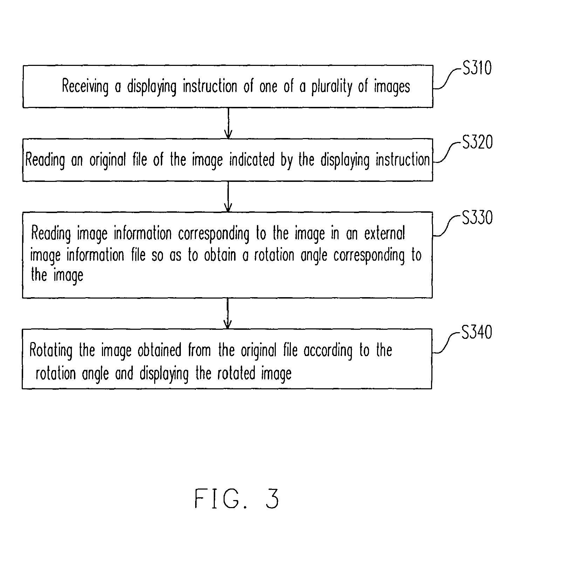

FIG. 3 is a flow chart of a method for displaying images according to an embodiment of the present invention. Referring to FIG. 3, the present embodiment is further to the first embodiment. In the present embodiment, an image to be displayed is rotated based on image information in an image information file and the rotated image is provided for users' browsing and viewing.

In the method of the present embodiment, first, a displaying instruction of one of a plurality of images is received (step S310). The images are, for example, saved in an image folder. When an image viewing function is activated, thumbnails of the images will be displayed on the screen of a device for users' browsing. Then, users can click on one of the thumbnails to view the image of actual size. Such a viewing instruction is generated based on the image selected by users.

After receiving a displaying instruction, the original file of the image specified by the displaying instruction is read by the device (step S320). Meanwhile, image information previously saved in an external image information file corresponding to the image is also read to obtain a rotation angle of the image (step S330). As described in the first embodiment, the image information of each of the images in the image folder is recorded in the image information file, and the image information includes filename, length of filename, file time, capturing time, size, rotation angle and effect of the image.

Accordingly, the image obtained from the original file can be rotated by the device according to the rotation angle obtained from the image information file. Then, the rotated image is displayed on the screen of the device (step S340).

In view of the foregoing, in the present embodiment, the rotation angle of each of the images is directly accessed from the image information file so as to adjust and display the image in an accurate direction without reading the image files one by one. Therefore, the time spent on reading EXIF files of the images can be saved and the speed of displaying the images can be increased.

It should be noted that after the image whose direction has been adjusted is displayed on the device, users still can add, delete or adjust images further when viewing images. The method for adding/deleting or adjusting images is, for example, clicking on a function button on the screen or selecting a function option in a menu. When users execute adding/deleting or adjusting images, the currently displayed image is processed correspondingly by the device based on the instruction received thereby. Meanwhile, the image information in the image information file corresponding to the image is also updated. An embodiment of updating the image information tile will be described in detail as follows.

### Third Embodiment

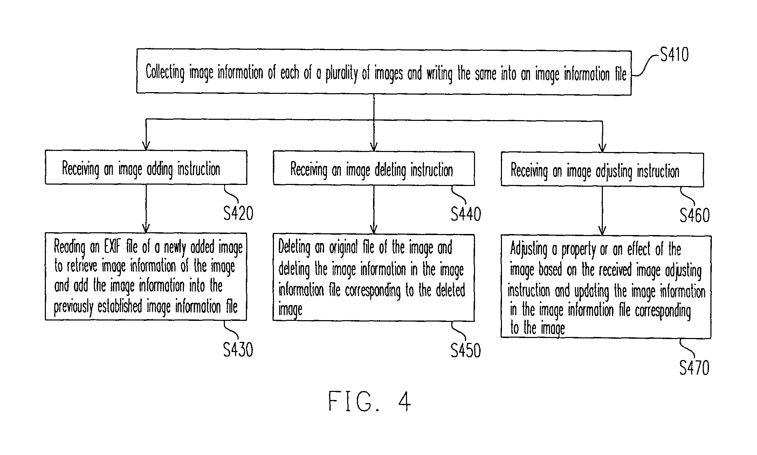

FIG. 4 is a flow chart of a method for updating image information files according to an embodiment of the present invention. Referring to FIG. 4, the present embodiment is further to the method for displaying images of the first embodiment. After users select the property or the effect of the image to be added/deleted or adjusted and when the image is sequentially displayed, the added/deleted or adjusted image is displayed corresponding to the image information file established before being updated.

First, image information of a plurality of images is collected by the device, and the collected image information is written into an image information file so as to establish the image information file (step S410). After the image information file is established, the device further determines how to update the image information file according to users' operations of the images. The present embodiment exemplifies three common operations for further illustration, which includes adding/deleting and adjusting images. The three operations will be described as follows:

Regarding the function of adding images: when an image adding instruction is received by the device (step S420), an EXIF file of a newly added image is read so that image information of the image is retrieved, and the image information is added into the previously established image information file (step S430).

Regarding the function of deleting images: when an image deleting instruction is received (step S440), besides the original file of the image is deleted, the image information in the image information file corresponding to the deleted image is also deleted (step S450).

Regarding the function of adjusting images: when an image adjusting instruction is received (step S460), the property or effect of the image is adjusted based on the received image adjusting instruction, and in the meantime, the image information in the image information file corresponding to the image is also updated (step S470). The image adjusting instruction includes, but not limit to, one of renaming the image, adjusting a path of the image and rotating the image.

Accordingly, the image information recorded in the image information file can be updated with respect to actual movement or adjustment of the images so that users can see the latest adjusted images when they view the images next time. Moreover, since the adjusted image information is collected and recorded in a specific image information file, the EXIF file of the image is not required to be accessed. Besides completeness of the original image file can be reserved from decreasing resolution due to multiple rotations, the time spent on writing the information back to the EXIF file can be reduced.

Besides the method for adding/deleting or adjusting images as described above, the present invention further includes obtaining time information of each of the images from the previously established image information file so as to sort the images before display. Therefore, users can view the images one by one based on their preferences. Another embodiment will be described hereinafter.

### Fourth Embodiment

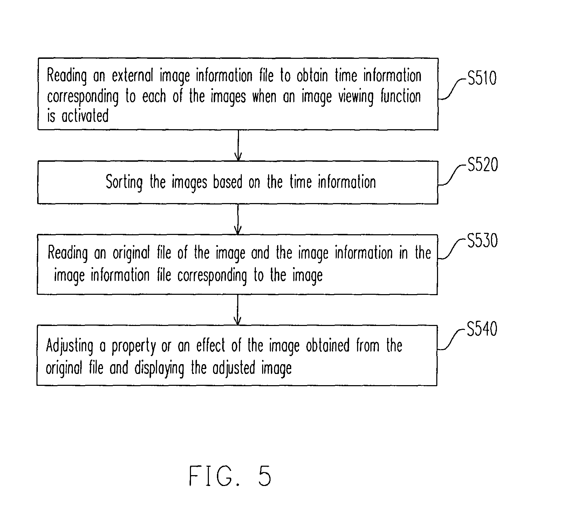

FIG. 5 is a flow chart of a method for displaying images according to an embodiment of the present invention. Referring to FIG. 5, the present embodiment is further to the first embodiment. In the present embodiment, images to be displayed are sorted based on time information recorded in the image information file and displayed for users' browsing and viewing.

According to the method of the present embodiment, when an image viewing function is activated, the image information file is read so as to obtain the time information corresponding to each of the images (step S510). The image information file includes information such as filename, length of filename, file time, capturing time, size, rotation angle and effect of each of the images. The time information includes file time and photo taken time.

After the time information of each of the images is obtained, the images are sorted (step S520) so that the sorted images are displayed on the screen of the device in order. A method for displaying the sorted images is, for example, to display a thumbnail or a filename of each of the images in order on the screen so that users can browse and view accordingly.

Next, as described in the previous embodiment, when the image displaying instruction is received by the device, the original file of the image and the image information in the image information file corresponding to the image are read (step S530). Meanwhile, based on the obtained image information, the property or effect of the image obtained from the original file is adjusted, and finally, the adjusted image is displayed (step S540).

It should be noted that the present embodiment also takes adding/deleting images into consideration. After viewing images, if users add images in the image folder or delete images from the image folder, the time information recorded in the image information file will be updated correspondingly, and the rest of images in the image folder will be re-sorted.

In detail, when an image adding instruction is received by the device, an EXIF file of a newly added image is read so that the image information of the image is retrieved and added into the previously established image information file. Besides updating the image information file, the images in the image folder are also re-sorted based on the time information thereof. In addition, when an image deleting instruction is received by the device, the original file of the image is deleted. Meanwhile, the image information in the image information file corresponding to the image is also deleted, and the rest of images in the image folder are re-sorted based on the time information thereof.

In view of the foregoing, the method of the present invention adopts an additional image information file to record the image information of each of the images. Therefore, only the required information in the image information file is accessed instead of accessing the EXIF file of the image. Hence, the speed of displaying the image can be increased. Furthermore, the method of separately saving the properties or effects of images can achieve the efficiency of adjusting images, simple and quick, without influencing or changing original files of images.

Although the present invention has been disclosed above by the embodiments, they are not intended to limit the present invention. Anybody skilled in the art can make some modifications and alteration without departing from the spirit and scope of the present invention. Therefore, the protecting range of the present invention falls in the appended claims.

## Claims

1. A method for displaying images, used for displaying a plurality of images, the method comprising:
a. activating an image viewing function;
b. reading an image information file, which stores image information corresponding to the images; and
c. adjusting properties or effects of the images based on the image information of the images so as to display the adjusted images.

2. The method for displaying images as recited in claim 1, wherein in step (a), the method further comprises collecting the image information of each of the images in advance and writing the same into the image information file.

3. The method for displaying images as recited in claim 2, wherein the step of collecting the image information of each of the images comprises:
reading an exchangeable image file (EXIF) of each of the images so as to obtain the image information of each of the images.

4. The method for displaying images as recited in claim 3, wherein the image information comprises one of filename, length of filename, file time, capturing time, size, rotation angle and effect of the image or a combination thereof.

5. The method for displaying images as recited in claim 4, wherein in step (c), the image is rotated according to the rotation angle so as to display the rotated image.

6. The method for displaying images as recited in claim 1, further comprising:
determining whether a new image is added; and
if an image is added, retrieving the image information of the newly added image and adding the same into the image information file.

7. The method for displaying images as recited in claim 1, further comprising:
determining whether any of the images is deleted; and
if the image is deleted, deleting the image information in the image information file corresponding to the deleted image.

8. The method for displaying images as recited in claim 1, further comprising:
receiving an image adjusting instruction; and
adjusting the currently displayed image correspondingly based on the image adjusting instruction and updating the image information in the image information file corresponding to the image.

9. The method for displaying images as recited in claim 8, wherein the image adjusting instruction comprises instructing one of renaming the image, adjusting a path of the image and rotating the image.

10. A method for displaying images, used for displaying a plurality of images, the method comprising:
reading an external image information file so as to obtain time information corresponding to each of the images when an image viewing function is activated; and
sorting the images based on the time information.

11. The method for displaying images as recited in claim 10, further comprising:
reading an original file of the image and the image information in the image information file corresponding to the image; and
adjusting a property or an effect of the image obtained from the original file and display the adjusted image.

12. The method for displaying images as recited in claim 11, wherein the image information comprises one of filename, length of filename, file time, capturing time, size, rotation angle and effect of the image or a combination thereof.

13. The method for displaying images as recited in claim 10, further comprising:
determining whether a new image is added; and
if an image is added, retrieving the time information of the newly added image and adding the same into the image information file.

14. The method for displaying images as recited in claim 10, further comprising:
determining whether any of the images is deleted; and
if the images is deleted, deleting the image information in the image information file corresponding to the deleted image.

15. A method for displaying images, used for displaying one of a plurality of images, the method comprising:
receiving a displaying instruction of one of the images;
reading an original file of the image;
reading an external image information file so as to obtain a rotation angle corresponding to the image, wherein image information of each of the images is recorded in the image information file; and
rotating the external image obtained from the original file according to the rotation angle so as to display the rotated image.
